# EUROPÄISCHE PATENTANMELDUNG

(11) **EP 0 856 683 A1**
(43) Veröffentlichungstag der Anmeldung: **05.08.1998**
(21) Anmeldenummer: 98101668.6
(22) Anmeldetag: 31.01.1998
(51) Int. Cl.: F16G 13/16

(54) **Kettenlasche für Energieführungsketten**

(30) Priorität: 03.02.1997 DE 19703885
(71) Anmelder: Murrplastik System-Technik GmbH, 71567 Oppenweiler (DE)
(72) Erfinder: Ehmann, Bruno, 73563 Mögglingen (DE); Funk, Rainer, 71543 Wüstenrot (DE)
(74) Vertreter: Jeck, Anton, Dipl.-Ing.

(57) **Zusammenfassung**

Die Erfindung betrifft eine Kettenlasche (10) für Kettenglieder einer Energieführungs-Kette, wobei zur Begrenzung des gegenseitigen Schwenkwinkels benachbarter und gelenkig miteinander verbindbarer Kettenglieder an den Kettenlaschen (10) Anschlagkörper (12, 14, 16) ausgebildet sind. In Partien (20, 22) der miteinander betriebsgemäß verbindbaren Kettenlaschen (10) sind Begrenzer (30, 32) von Relativbewegungen in axiale Richtung miteinander in Wirkverbindung stehender Anschlagkörper (12, 14, 16) ausgebildet.

## Beschreibung

Die Erfindung betrifft eine Kettenlasche nach dem Oberbegriff des Anspruchs 1.

Bei herkömmlichen Kettenlaschen der eingangs genannten Art, wie sie z.B. in der DE 35 31 066 A1 beschrieben sind, sind trapezförmige Anschläge und sektorförmige Ausnehmungen vorgesehen , die in ihrer wirksamen Stellung den axialen Kräften entgegenwirken. In der DE 38 10 452 A1 ist eine Energieführungskette offenbart, bei der die Anschlagkörper durch hinterschnittene Nuten gebildet sind, die mittig und radial durch Teller und Topf verlaufen. In diesen Nuten ist ein in die Nutenhinterschneidungen eingreifbares Verbindungsglied zur Kopplung von Teller und Topf einsetzbar. Die Nutenhinterschneidungen sind als absatzförmige Vorsprünge ausgebildet und bilden Begrenzer, die eine axiale Versetzung von Topf und Teller im Anschlagfall verhindern. In der DE 34 31 531 A1 ist offenbart, daß die Anschlagflächen der Anschläge der Kettenlaschen schräg ausgebildet sind und Vorsprünge bilden, durch welche die Seitenwände der Kettenlaschen in der Anschlaglage aneinandergezogen werden. Schließlich ist in der DE 24 15 374 A1 eine Energieführungskette offenbart, bei der die Anschlagflächen der Anschläge schräg hinterschnitten sind, so daß eine Verkeilung der Anschläge im Anschlagfall und damit eine Begrenzung und ein Auffangen der axialen Kräfte stattfindet. Bei den herkömmlichen Kettenlaschen wird als Nachteil empfunden, daß die Kompensation der Kräfte in Bezug auf die Schwenkachsen ungleichmäßig ist.

Ausgehend von dem obigen Stand der Technik liegt der Erfindung die Aufgabe zugrunde, die gattungsgemäße Kettenlasche ohne unangemessenen konstruktiven Aufwand so weiterzubilden, daß durch einfacheres Spritzgießwerkzeug Kettenlaschen für Energieführungsketten hergestellt werden, die die axialen Kräfte optimal auffangen können, die einfacher herstellbar sind und die sowohl als Rechts- als auch als Links-Kettenlaschen verwendbar sind.

Die gestellte Aufgabe wird erfindungsgemäß durch die Merkmale des Anspruches 1 gelöst.

Man erkennt, daß die Erfindung jedenfalls dann verwirklicht ist, wenn es sich um eine regelmäßig aus Kunststoff bestehende Kettenlasche handelt, die Mittel oder Organe aufweist, die dazu geeignet sind, die miteinander in Eingriff bringbaren Partien zweier zusammenarbeitender Kettenlaschen im Schwenkbegrenzungsbereich der Kettenlasche so miteinander zu verbinden, daß die dort wirkenden Kräfte in Bezug auf die Schwenkachse gleichmäßig kompensiert werden. Die Kettenlasche kann auch mit Organen (Begrenzern) versehen sein, die dazu geeignet sind, diese Kräfte an anderen Stellen der Kettenlasche aufzufangen.

Je weiter sich diese Begrenzer von der Gelenkachse befinden, umso besser kann die negative Wirkung solcher Kräfte herabgesetzt werden, zumal das Lastarm : Kraftarm-Verhältnis in diesem Falle günstig ist. Die Begrenzer können dabei so ausgebildet sein, daß sie erst dann aktiv eingesetzt werden, wenn die Anschlagkörper miteinander zusammenarbeiten. Daher ist es zweckmäßig, wenn die Begrenzer an den Anschlagkörpern selbst angeformt sind.

Weitere zweckmäßige und vorteilhafte Ausgestaltung der Erfindung gehen aus den Unteransprüchen hervor.

Eine zweckmäßige Ausgestaltung sieht vor, daß die Begrenzer mit Abstand zur Innenwand der Kettenlasche angeordnet sind. Handelt es sich um Kettenlaschen mit um eine gemeinsame Gelenkachse verteilten und in Axialrichtung sich erstreckenden Anschlagkörpern, dann ist es zweckmäßig, wenn die miteinander zusammenarbeitenden Anschlagkörper in axialer Draufsicht in etwa trapezförmig sind, wobei die Begrenzer an den in etwa radial sich erstreckenden Seiten (Wänden) angeordnet sind. Handelt es sich um Kettenlaschen, die einteilig ausgebildet sind, mittels quer zur Energieführungs-Kette sich erstreckenden Stegen miteinander verbindbar sind und bei denen die Anschlagkörper am Boden der jeweiligen Scheibe angeformt sind, dann ist es zweckmäßig, wenn der Außendurchmesser der gegeneinander um eine gemeinsame Achse verdrehbaren Scheiben zweier in Eingriff stehender Kettenlaschen in etwa gleich groß ist, wenn die Scheiben an ihrem radialen Außenumfang jeweils einen axial vorstehenden Kragen aufweisen und wenn die Kragen axialseitig ineinandergreifen und die Verbindungsstelle der beiden Kettenlaschen radialseitig abdecken. Solche Laschen haben im Bereich der Scheiben einen Querschnitt in Form eines gestreckten U, dessen beide parallel zueinander verlaufenden Schenkel erheblich kürzer sind als die Basis. Um zu verhindern, daß in den Innenraum der Verbindungsstelle zweier in Eingriff stehende Kettenlaschen Verunreinigungen gelangen, ist es zweckmäßig, wenn die Kragen in axialem Querschnitt stufenförmig und wechselseitig abgesetzt sind und sich gegenseitig zumindest teilweise überlappen. Durch diese Maßnahmen entsteht an der Stoßstelle eine vorzugsweise Z-förmige Schikane, die als Barriere für die Verunreinigungen dient. Schließlich betrifft die Erfindung auch eine Energieführungskette mit Kettenlaschen der hier in Rede stehenden Art.

Ein Ausführungsbeispiel der Erfindung ist in der Zeichnung schematisch dargestellt und wird im folgenden näher erläutert. Es zeigen:
- Fig. 1: die Innenseite einer Kettenlasche,
- Fig. 2: die Außenseite der Kettenlasche nach Fig. 1,
- Fig. 3: eine Ansicht in Richtung III-III nach Fig. 2 und
- Fig. 4: einen vergrößerten Schnitt durch einen Teil zweier in Eingriff stehender Anschlagkörper zusammenarbeitender Kettenlaschen.

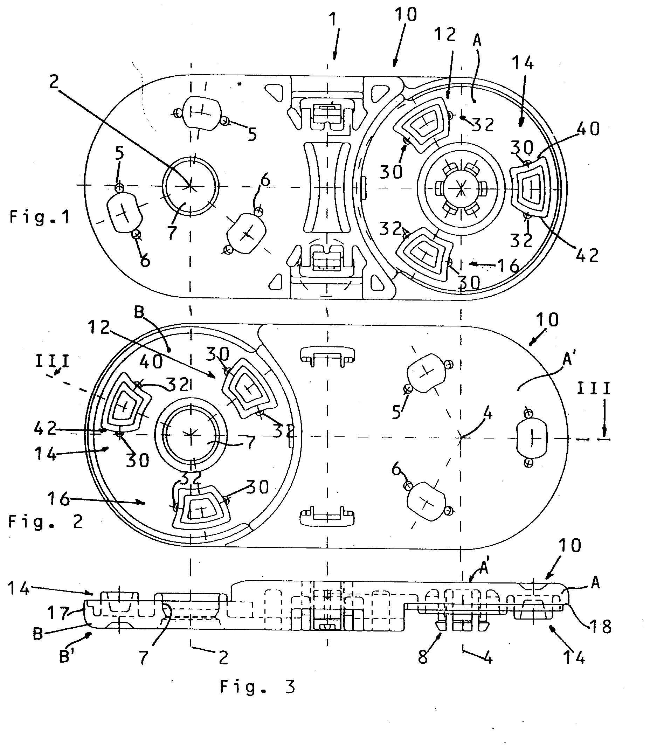

In den Figuren 1 bis 3 ist eine Kettenlasche 10 für Kettenglieder einer durch Spritzen herstellbaren und aus Kunststoff bestehenden Energieführungskette dargestellt. Zur Begrenzung des gegenseitigen Schwenkwinkels zweier benachbarter und gelenkig miteinander verbindbarer Kettenglieder sind an den Kettenlaschen 10 Anschlagkörper 12, 14 und 16 ausgebildet. In Partien der miteinander betriebsgemäß verbindbaren Kettenlaschen 10 sind Begrenzer 30, 32 von Relativbewegungen in axialer Richtung miteinander in Wirkverbindung stehender Anschlagkörper 12, 14, 16 ausgebildet. Man erkennt, daß die Begrenzer 30, 32 an den Kettenlaschen 10 als Vorsprünge bzw. Ausnehmungen angeformt sind. Es ist ferner zu erkennen, daß die Begrenzer 30, 32 an den Anschlagkörpern 12,14, 16 und an den Innenseiten der Kettenlaschen 10 angeformt und mit Abstand zur Innenwand der jeweiligen Kettenlasche angeordnet sind. Die Anschlagkörper 12, 14, 16 sind jeweils um eine gemeinsame Gelenk-achse 2, 4 gleichmäßig verteilt und erstrecken sich als Vorsprünge in axialer Richtung. Die miteinander zusammenarbeitenden Anschlagkörper 12, 14, 16 be-nachbarter Kettenglieder sind in axialer Draufsicht in etwa trapezförmig ausge-bildet, wobei die Begrenzer 30, 32 an den in etwa radial sich erstreckenden Seiten (Wänden) 40, 42 angeordnet sind.

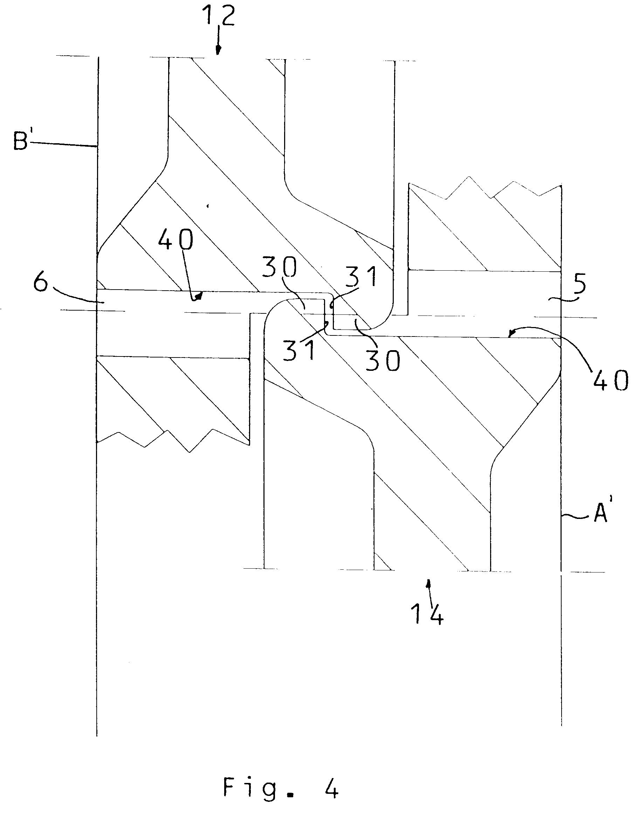

Ferner lassen die Figuren 1 bis 3 erkennen, daß es sich hier um Kettenlaschen handelt, die einstückig ausgebildet sind, wobei mittels quer zur Energieführungskette sich erstreckenden Stegen jeweils zwei Kettenlaschen miteinander verbindbar sind. Dabei sind die Anschlagkörper 12, 14, 16 am Boden jeweils einer kreisrunden Scheibe A, B angeformt. Der Außendurchmesser der gegeneinander um die gemeinsame Achse 2, 4 verdrehbaren Scheiben A, B ist in etwa gleich groß. Die Scheiben A, B weisen an ihrem radialen Außenumfang jeweils einen axial vorstehenden Kragen 17, 18 auf. Die Kragen sind dabei so ausgebildet, daß sie ineinandergreifen und die Verbindungsstelle der miteinander zusammenarbeitenden Kettenlaschen radialseitig abdecken. Für diese Zwecke sind die Kragen 17, 18 in ihrem axialen Querschnitt stufenförmig abgesetzt, so daß sie sich gegenseitig zumindest teilweise überlappen. Die erfindungsgemäße Kettenlasche ist vorzugsweise für Energieführungsketten für die Zufuhr von Verbrauchsmitteln aller Art durch Leitungen von einem festen Anschluß zu einem beweglichen Verbraucher vorgesehen. Dabei sind die Leitungen in durchgehenden Innenräumen einer tragenden Gelenkkette mit Kettenglied angeordnet. Die Kettenglieder bestehen aus jeweils zwei parallel zueinander angeordneten und miteinander verbundenen Kettenlaschen. Die quer zur Erstreckung der Energieführungskette angeordneten Stege (nicht dargestellt) greifen im mittleren Bereich 1 der jeweiligen Kettenlasche 10 ein, wobei sie mit den Kettenlaschen lösbar verbindbar, wie im vorliegenden Fall, sein können. Es besteht jedoch auch die Möglichkeit, zumindest einen Steg mit den Kettenlaschen einstückig auszubilden. Zur Begrenzung des gegenseitigen Schwenkwinkels der Kettenlasche sind die Anschlagkörper 12, 14, 16 um die gemeinsamen Achsen 2 und 4 angeformt, die den Verschwenkwinkel der jeweils zwei in Wirkverbindung stehenden Kettenlaschen definieren. Es können auch weniger oder mehr als drei Anschlagkörper 12, 14, 16 vorgesehen sein, die vorzugsweise einen trapezförmigen Querschnitt aufweisen, als Hohlkörper ausgebildet und um die Achsen 2, 4 gleichmäßig verteilt sind. Während der maximalen Ausschwenkung der Kettenlaschen stehen die Seiten/Wände 40, 42 jeweils zweier Kettenlaschen in Druckverbindung, wobei zwischen ihnen Kräfte wirken, die bestrebt sind, die einander zugekehrten Innenseiten der Kettenlaschen voneinander zu drücken. Um dies zu verhindern, sind die Begrenzer 30, 32 vorgesehen, die an den in etwa radial sich erstreckenden Wänden 40, 42 angeformt und mit Abstand zu der jeweiligen Scheibe A, B angeordnet sind. Stehen also jeweils zwei Wände 40, 42 zweier Seitenlaschen in Druckverbindung, dann stehen jeweils zwei Begrenzer 30, 32 in Eingriff, wie Figur 4 zu entnehmen ist. Diese hakenförmigen Begrenzer 30 stehen über ihre Partien 31 miteinander in Druckverbindung und verhindern, daß die Scheiben A, B voneinander gedrückt werden. Wird der Winkel zwischen jeweils zwei Kettenlaschen verändert, stehen diese Begrenzer nicht mehr in Eingriff. Die Kettenlaschen besitzen jeweils eine Gelenköffnung 7 und einen Gelenkzapfen 8, die so bemessen und ausgebildet sind, daß jeweils zwei Kettenlaschen 10 miteinander problemlos verbunden bzw. voneinander gelöst werden können. Die Herstellung der Begrenzer 30, 32 wird so erreicht, daß auf den Außenseiten A' und B' Öffnungen 5 und 6 ausgebildet sind, die parallel zu den Seitenwänden 40 und 42 verlaufen und die Scheiben A, B durchqueren, so daß ein entsprechender Schieber hindurchgeführt werden kann. Die Begrenzer 30, 32 haben die Form eines "Tröpfchens".

## Patentansprüche

1. Kettenlasche (10) für Kettenglieder einer Energieführungs-Kette mit Anschlagkörpern (12, 14, 16) zur Begrenzung des gegenseitigen Schwenkwinkels benachbarter und gelenkig miteinander verbindbarer Kettenglieder, die mit Abstand zur Schwenkachse (2, 4) angeordnet sind und in etwa radial sich erstreckende Seiten (40, 42) aufweisen, sowie mit Begrenzern (30, 32) von quer zur Schwenkachse (2, 4) ausübenden Relativbewegungen der Anschlagkörper (12, 14, 16), die als mit Abstand zur Innenseite der Kettenlasche (10) angeordnete, von den Seiten (40, 42) getragene und in Umfangsrichtung weisende Vorsprünge ausgebildet sind,
dadurch gekennzeichnet,
daß in der Wand der Kettenlasche (10) durchgehende Öffnungen (5, 6) für Schieber des Spritzgießwerkzeugs zur Herstellung der Begrenzer (30, 32) ausgebildet sind.

2. Kettenlasche nach Anspruch 1,
dadurch gekennzeichnet,
daß die Öffnungen (5, 6) sich in Richtung der Schwenkachsen (2, 4) erstrecken.

3. Kettenlasche nach Anspruch 1 oder 2,
dadurch gekennzeichnet,
daß in den Seiten (40, 42) Nuten ausgebildet sind, die sich von der Wand bis zu den Begrenzern (30, 32) erstrecken.

4. Kettenlasche nach einem der Ansprüche 1 bis 3,
dadurch gekennzeichnet,
daß die Tiefe der Nuten auf die Höhe der Begrenzer (30, 32) abgestimmt ist.

5. Kettenlasche nach einem der Ansprüche 1 bis 4,
dadurch gekennzeichnet,
daß die miteinander zusammenarbeitenden und um die Achse (2,4) gleichmäßig verteilten Anschlagkörper (12, 14, 16) in axialer Draufsicht in etwa trapezförmig ausgebildet sind, wobei die Begrenzer (30, 32) an den in etwa radial sich erstreckenden Seiten (40, 42) angeordnet sind.

6. Kettenlasche nach einem der Ansprüche 1 bis 5, die einteilig ausgebildet ist, mittels quer zur Energieführungs-Kette sich erstreckenden Stegen verbindbar ist und bei der die Anschlagkörper am Boden von Scheiben (A, B) angeformt sind,
dadurch gekennzeichnet,
daß der Außendurchmesser der gegeneinander um die gemeinsamen Achsen (2, 4) verdrehbaren Scheiben (A, B) zweier miteinander zu-sammenarbeitender Kettenlaschen in etwa gleich groß ist, daß die Scheiben (A, B) an ihrem radialen Außenumfang jeweils einen axial vorstehenden Kragen (17, 18) aufweisen und daß die Kragen (17, 18) axialseitig ineinandergreifen und die Verbindungsstelle der Kettenlaschen radialseitig abdecken.

7. Kettenlasche nach Anspruch 6,
dadurch gekennzeichnet,
daß die Kragen (17, 18) in ihrem axialen Querschnitt stufenförmig abgesetzt sind und wenn sie sich gegenseitig zumindest teilweise überlappen.

8. Energieführungskette mit Kettenlaschen nach einem der Ansprüche 1 bis 7 aufweisenden Kettengliedern.
